# EUROPÄISCHE PATENTSCHRIFT

(11) **EP 0 518 808 B1**
(45) Veröffentlichungstag und Bekanntmachung des Hinweises auf die Patenterteilung: **21.08.1996**
(21) Anmeldenummer: 92810328.2
(22) Anmeldetag: 05.05.1992
(51) Int. Cl.: G07F 7/08

(54) **Kassierautomat**
Automatic money collector
Machine automatique d'encaissement

(30) Priorität: 05.06.1991 CH 1674/91
(43) Veröffentlichungstag der Anmeldung: 16.12.1992
(73) Patentinhaber: ASCOM AUTELCA AG, CH-3073 Gümligen (CH)
(72) Erfinder: Pitteloud, Pierre, CH-3114 Niederwichtrach (CH); Pfeiffer, Jacques, CH-3510 Konolfingen (CH)
(74) Vertreter: Roshardt, Werner Alfred, Dipl.-Phys.

(56) Entgegenhaltungen:
- EP-A- 0 256 768
- EP-A- 0 345 108
- EP-A- 0 421 808
- WO-A-83/03018
- DE-A- 4 103 415

## Beschreibung

### Technisches Gebiet

Die Erfindung betrifft einen Kassierautomat mit einem Chipleser für den bidirektionalen Datenaustausch zwischen einem tragbaren Chip von der Art einer Chipkarte und dem Kassierautomaten und einer Kleingeldtransfersteuerung zum Einkassieren von elektronischem Kleingeld von einem mit dem Chipleser in Verbindung stehenden Kundenchip, wobei das einkassierte elektronische Kleingeld auf einen tragbaren Betreiberchip von der Art einer Chipkarte übertragen wird.

Die Erfindung betrifft auch einen Betreiberchip für den Kassierautomaten der genannten Art mit mindestens einer Speichereinheit und einer Steuereinheit.

### Stand der Technik

Kassierautomaten sind mechanische und/oder elektronische Geräte, die einen vorgegebenen Geldbetrag von einem Kunden einkassieren und kontrollieren. Wenn der Geldbetrag z. B. in Form von Münzen, vollständig und korrekt eingegeben worden ist, dann wird dies vom Kassierautomaten z. B. an eine Warenausgabeeinheit signalisiert, die ihrerseits die gewünschte Ware ausgibt. Solche Kassierautomaten (z. B. mechanische Münzautomaten) werden z. B. in Vorrichtungen zum Ausgeben von Briefmarken, Snacks, Zeitungen, Billetten usw. verwendet. Das bekannteste Beispiel dürfte wahrscheinlich der öffentliche Telefonautomat sein.

Das Problem bei den meisten bekannten Münzautomaten besteht darin, dass der Kunde den benötigten Geldbetrag in Form von geeigneten Münzen exakt bei sich haben muss. Zwar sind auch Kassierautomaten bekannt, die Rückgeld herausgeben. Diese Bedienungsfreundlichkeit ist aber mit einem beträchtlichen Aufwand verbunden, muss doch im Automaten das Rückgeld in sortierter Form abgespeichert sein.

Um diesem Uebel abzuhelfen, haben z. B. Fernmeldeorganisationen Karten ausgegeben, die vom Kunden gekauft werden können und in einem geeigneten Telefonautomaten sukzessive entwertet werden können. Dieser bekannten Karte liegt das Jetonprinzip zu Grunde. D. h. auf der Karte sind eine grosse Zahl von Werteinheiten (z. B. 10 Rappen-Einheiten) abgespeichert, von denen pro gebührenpflichtiger Zeiteinheit eine entwertet wird. In der einfachsten Form handelt es sich bei diesen Karten um Einwegkarten. Wenn die letzte Einheit entwertet ist, dann ist die ganze Karte wegzuwerfen. Die Nichtaufladbarkeit der Karte hat auch gewisse sicherheitstechnische Aspekte, da die Missbrauchsgefahr dadurch praktisch ausgeschlossen wird.

Die bekannte Telefonkarte hat den Nachteil, dass sie spezifisch auf die Anwendung bei Telefonautomaten beschränkt ist. Im allgemeinen Bestreben, den Zahlungsverkehr insbesondere auch bei kleinen Geldbeträgen zu vereinfachen, ist es deshalb wünschenswert, Mittel für den bargeldlosen Zahlungsverkehr mit möglichst breiter Anwendung zu schaffen.

Aus der europ. Patentanmeldung EP Al 0 261 618 ist nun ein Verkaufsresp. Dienstleistungsautomat bekannt, der ein Lesegerät für einen Datenträger (Identifikationsmittel) z. B. in der Form eines kleinen elektronischen Plastikschlüssels aufweist, und der für die verschiedensten Anwendungen geeignet ist. In der erwähnten Veröffentlichung wird insbesondere beschrieben, wie der Schlüssel im Leser fixiert werden kann, damit er vom Benutzer während des Datenaustausches nicht in unkontrollierter Weise entfernt werden kann. Wie der Datenaustausch im einzelnen abläuft und wie die verschiedenen sicherheitstechnischen Aspekte berücksichtigt werden, ist allerdings nicht erläutert.

Aus der EP 0 421 808 A2 ist ein Geldtransfersystem bekannt, welches sowohl mit Kundenkarten (Kreditkarten) als auch mit Detailhändlerkarten operiert. Der Detailhändler und der Kunde führen ihre Karten in je einen Kartenleser des POS-Terminals ein. Der Kunde kann seine Karte an einem FTM-Terminal aufladen. Mit der Karte kann der Kunde auch an Selbstbedienungsautomaten zahlen, wobei kleine Beträge ohne Passwort belastet werden können. Zwingend ist, dass zwei "Smart-Cards" gleichzeitig in den POS-Kassierautomaten eingeführt werden können.

Die EP 0 345 108 Al befasst sich mit einem "elektronischen Portemonnaie". Es handelt sich um eine Karte mit einem EEPROM, welches für verschiedene Werteinheiten verschiedene Speicherbereiche aufweist. Ausgehend von einem Basiswert sind mehrere Werte zur Potenz 2 vorhanden. Grundsätzlich wird davon ausgegangen, dass von jedem der abgestuften Werte gleichviele vorhanden sind. Es wird auch vorgeschlagen, pro Wertstufe unterschiedliche Anzahlen von Werteinheiten vorzusehen. Damit der geladene Betrag optimal ausgenutzt und der Restbetrag möglichst klein ist, ist ein Verfahren zum Regenerieren einzelner Wertstufen auf Kosten höherer Wertstufen vorgesehen. Der Kunde kann die Karte an passwortgesicherten Terminals aufladen und bei niedrigerer Sicherheit in Verkaufsautomaten belasten.

### Darstellung der Erfindung

Aufgabe der Erfindung ist es, einen Kassierautomaten der eingangs genannten Art anzugeben, der eine Vereinfachung des Kleingeldtransfers bei einem breiten Spektrum von Anwendungen ermöglicht. Ebenso ist es Aufgabe der Erfindung, eine Anlage mit einem solchen Kassierautomaten anzugeben, die den gesamten Kreislauf des Kleingeldverkehrs umfasst. Schliesslich ist es auch Aufgabe der Erfindung, Kunden- resp. Betreiberchips anzugeben, die sich für die Verwendung in der erwähnten Anlage eignen.

Die Lösung dieser Aufgabe ergibt sich aus den kennzeichnenden Merkmalen des Anspruchs 1.

Der Vorteil dieser Lösung besteht darin, dass der Kassierautomat beim Registrieren nicht an eine zentrale Computeranlage angeschlossen sein muss. Es wird nämlich davon ausgegangen, dass der Inhaber des Kundenchips berechtigt ist. Es erübrigt sich damit die Rückfrage über eine on-line-Verbindung an ein Computerzentrum, ob der einzukassierende Betrag bezogen werden darf. Der Betreiber des Kassierautomaten (z. B. der Kioskinhaber) braucht sich seinerseits nicht mehr mit Münzen und kleinen Noten herumzuschlagen. Er hat nämlich seine Karte, mit der er am Abend zu einem Bankterminal gehen kann, um sich den eingenommenen Kassenbestand gutschreiben zu lassen. Es leuchtet ein, dass die Erfindung insbesondere bei selbständigen Automaten (Billettautomaten, Postmarkenautomaten etc.) den betrieblichen Ablauf massgeblich verbessert. Anstatt mit grossen schweren Behältern voller Münzen zu hantieren, braucht er nur noch mit seiner Betreiberchipkarte von Automat zu Automat zu gehen, um diese zu entleeren.

Gemäss der Erfindung ist genau ein Chipleser vorgesehen. Die Kleingeldtransfersteuerung ist so ausgebildet, dass jeder elektronische Kleingeldtransfer mit jedem Kundenchip im Zwischenspeicher registriert wird und dass der Inhalt des Zwischenspeichers über den einen Chipleser auf den Betreiberchip entleert werden kann.

Die Chipkarte des Betreibers braucht während des Transfers nicht im Kassierautomaten eingeführt zu sein. Betreiberseitig genügt also eine Chipkarte für mehrere Automaten.

Vorzugsweise handelt es sich beim Betreiberchip um einen wahlweise elektronisch sicherbaren Chip mit einer Steuereinheit und einer Speichereinheit. Die Steuereinheit ist so ausgebildet, dass einerseits ein Aufladen

der Speichereinheit beim elektronischen Kleingeldtransfer vom Kundenchip zum Betreiberchip ohne Ueberprüfung der Berechtigung des Kunden oder Betreibers erfolgen kann (d. h., dass der Karteninhaber als berechtigt betrachtet wird), dass aber andererseits das Entleeren dieser Speichereinheit an einem Terminal eines Clearingrechners nur bei erfolgreichem Berechtigungsnachweis des Betreibers durchgeführt werden kann. Diese abgestufte Sicherheitsmassnahme ist insbesondere dann von Vorteil, wenn der Betreiberchip im Kassierautomaten eingefügt sein muss beim Einkassieren des Geldes. Die vielen kleinen Transaktionen können dadurch schnell und einfach vonstatten gehen. Unzulässige Manipulationen des Betreibers können z. B. dadurch verhindert werden, dass sporadisch gewisse Kundenkarten identifiziert werden, diese Identifikationen auf dem Betreiberchip abgespeichert werden und vom Clearingrechner überprüft werden.

Bei einer besonders bevorzugten Ausführungsform des Kundenchips ist eine Speichereinheit vorgesehen, die mehrere Speicheruntereinheiten aufweist. Jede Speicheruntereinheit registriert Geldwerte in Form einer für sie spezifischen Werteinheit. Im Prinzip enthält ein solcher Kundenchip unterschiedliche Jetons. Wenn die Chipkarte mit einer Börse voller Jetons verglichen wird, dann enthält die erfindungsgemässe "Jetonbörse" bei vorgegebener Gesamtzahl der Jetons einen höheren Geldbetrag als dann, wenn nur Jetons einer Einheit vorhanden wären.

Vorzugsweise entspricht der Betrag der kleinsten Werteinheit einer bestimmten Landeswährung. Die spezifischen Werteinheiten der übrigen Speicheruntereinheiten sollten einer ganzzahligen Zweierpotenz der erwähnten kleinsten Werteinheit entsprechen. Eine optimale Ausnützung des Speicherplatzes lässt sich dann erreichen, wenn die Speicheruntereinheiten verschieden gross sind. Werteinheiten, die statistisch gesehen häufig gebraucht werden, erhalten mehr Speicherplatz zugeteilt als andere.

Eine Anlage für den elektronischen Kleingeldtransfer gemäss der Erfindung zeichnet sich durch mindestens einen Kassierautomaten, mindestens einen (vorzugsweise viele) Kundenchip(s), einen (oder mehrere) Betreiberchip(s) und mindestens einen Clearingrechner mit mindestens einem ersten on-line-Terminal zum Ausgeben von Kundenchips oder Aufladen der Kundenchips und mindestens einem zweiten on-line-Terminal zum Entleeren der Betreiberchips. Die Kleingeldtransfersteuerung des Kassierautomaten oder die einer Steuereinheit des Kundenchips ist mit Vorteil so ausgebildet, dass zum Registrieren eines bestimmten Geldwertes in der Speichereinheit des Kundenchips beginnend bei der grössten noch verfügbaren Werteinheit, die nicht grösser als der bestimmte Geldwert ist, folgende Schritte rekursiv durchgeführt werden:
a) Es werden so viele Werteinheiten gelöscht, bis ein verbleibender Restbetrag kleiner als die Werteinheit ist oder die Werteinheit aufgebraucht ist;
b) falls der Restbetrag grösser 0 ist, dann werden bei der nächst kleineren, noch verfügbaren Werteinheit, die nicht grösser als der im vorhergehenden Schritt verbliebene Restbetrag ist, analog zu Schritt a) Werteinheiten gelöscht. Der zweite Schritt wird so oft wiederholt, bis der gesamte Geldwert registriert ist.

Der Vorteil dieser Steuerung liegt darin, dass alle Speicherplätze etwa gleich häufig gelesen resp. beschrieben werden. Eine ungleichmässige Abnützung des Speichers wird weitgehend vermieden. Aus sicherheitstechnischer Sicht ist es vorteilhaft, im Kundenchip eine grosse Zahl von gleichen Speichereinheiten mit gleichartig ausgebildeten Speicheruntereinheiten vorzusehen, wobei jeder Speicherplatz nur einmal beschreibbar ist. Wenn die Steuerung schliesslich so ausgebildet ist, dass die Speichereinheiten, deren kleinste Werteinheiten alle aufgebraucht sind, als entwertet markiert werden, dann müssen während eines Kleingeldtransfers nur sehr wenige Speichereinheiten resp. -untereinheiten eingelesen werden. Dies wirkt sich vorteilhaft auf die Transaktionszeit aus.

Aus der nachfolgenden Beschreibung und den Zeichnungen ergeben sich weitere vorteilhafte Ausführungsformen und Merkmalskombinationen.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a: ein Blockschaltbild eines Kassierautomaten mit zwei Chiplesern;
- Fig. 1b: ein Blockschaltbild eines Kassierautomaten mit einem Chipleser und einem Zwischenspeicher;
- Fig. 2: ein Blockschaltbild eines Clearingrechners mit zwei on-line-Terminals;
- Fig. 3: ein Blockschaltbild eines Kundenchips mit mehreren gleichartigen Speicherblöcken; und
- Fig. 4: ein Blockschaltbild einer Speichereinheit mit unterschiedlich grossen Speicheruntereinheiten.

In den Figuren sind grundsätzlich gleiche Teile mit gleichen Bezugszeichen versehen.

### Wege zur Ausführung der Erfindung

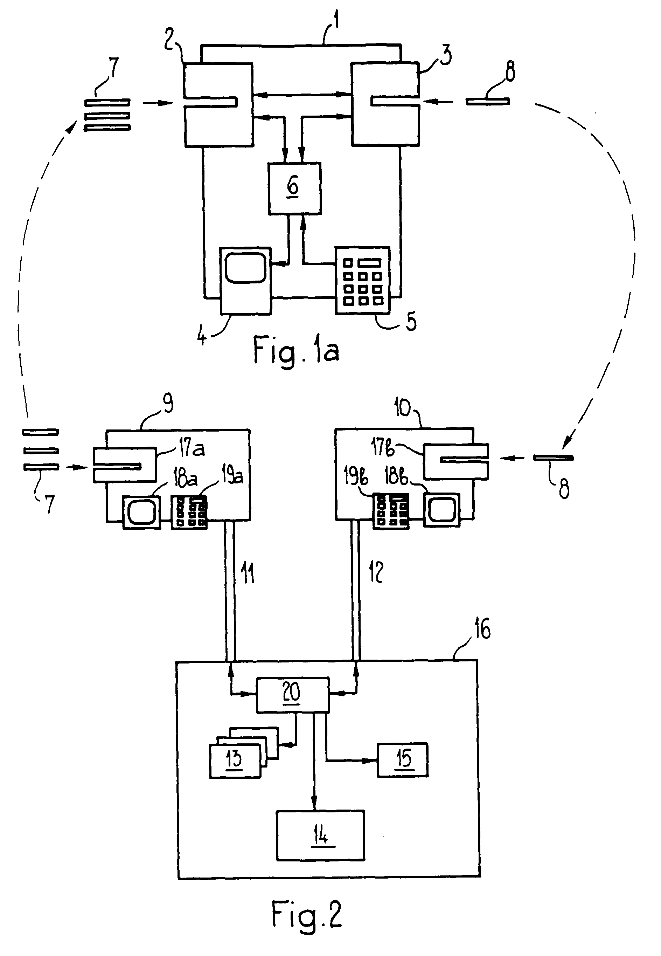

Fig. 1a zeigt ein Blockschaltbild eines Kassierautomaten 1. Er umfasst einen ersten und einen zweiten Chipleser 2 resp. 3, eine Anzeigeeinheit 4, eine Tastatur 5 und eine Kleingeldtransfersteuerung 6.

Der erste Chipleser 2 ist zum Lesen von Kundenchipkarten 7 geeignet. Die Kundenchipkarte 7 ist z. B. ein Plastikträger von der Grösse einer Kreditkarte, auf dem eine integrierte Halbleiterschaltung untergebracht ist. Der Kundenchip kann natürlich auch in einem als Plastikschlüssel oder sonstwie geformten Träger untergebracht sein. Er lässt sich in den Chipleser 2 so einführen, dass der Halbleiterchip mit der Kleingeldtransfersteuerung 6 in Verbindung treten kann.

Der zweite Chipleser 3 kann eine Betreiberchipkarte 8 aufnehmen, die ihrerseits in Datenverbindung mit der Kleingeldtransfersteuerung 6 treten kann. Von aussen gesehen können Kunden- und Betreiberchip völlig identisch sein, in der inneren Struktur allerdings unterscheiden sie sich, wie weiter unten beschrieben wird.

Die Anzeigeeinheit 4 ist z. B. ein kleiner Bildschirm, der den zu kassierenden Betrag anzeigt. Ueber die Tastatur 5 wird z. B. der zu registrierende Geldbetrag eingegeben oder eine sonstige spezielle Funktion aufgerufen.

Im folgenden wird nun der Ablauf einer Transaktion beschrieben, anhand der die wesentlichen Merkmale der Erfindung zu Tage treten.

Es ist vorauszuschicken, dass der Kassierautomat 1 zum Abwickeln von kleineren Transaktionen geeignet ist. Typische Beispiele sind der Kauf einer Zeitung, eines Snacks, eines Billetts, oder die Bezahlung eines Telefongesprächs, einer Kantinenmahlzeit usw. Als Betreiber kommen entsprechend ein Kioskinhaber, ein Verkehrsbetrieb, die Fernmeldeorganisation, oder ein sonstiger Automatenbetreiber in Frage.

Damit im vorliegenden Fall überhaupt Geld einkassiert werden kann, muss die Betreiberchipkarte 8 in den Chipleser 3 eingeführt sein. Der Kunde steckt dann seine Chipkarte 7 in den ersten Chipleser 2, was von der Kleingeldtransfersteuerung 6 registriert wird.

Nun kann der geschuldete Geldbetrag über die Tastatur 5 eingetippt werden. Er wird vorzugsweise auf der optischen Anzeigeeinheit 4 angezeigt. Je nach Anwendung (z. B. bei Billett- oder Telefonautomaten) kann der Geldbetrag auch vom Selbstbedienungsautomaten vorgegeben werden (aufgrund der gewünschten Fahrkarte oder des gegebenen Gesprächstarifs).

Nun erfolgt der Transfer des geschuldeten Betrags von der Kundenchipkarte 7 zur Betreiberchipkarte 8. Er wird initiiert und/oder überwacht von der Kleingeldtransfersteuerung 6. Da der in der Kundenchipkarte abgespeicherte Geldbetrag insgesamt vom Kunden im voraus bezahlt worden ist (und vom Kunden natürlich eine gewisse Sorgfalt bei der Aufbewahrung seiner Karte erwartet werden kann), wird die erwähnte Transaktion ohne Identifikation des Benutzers durchgeführt. Sobald das Ende der Transaktion erreicht ist, wird die Kundenchipkarte wieder freigegeben.

Wie in der Fig. 1a angedeutet, werden nacheinander mehrere Transaktionen von verschiedenen Kundenchipkarten 7 auf ein und dieselbe Betreiberchipkarte 8 durchgeführt.

Fig. 2 in Verbindung mit Fig. 1a zeigt den ganzen Kleingeldkreislauf. Ein erstes resp. zweites Terminal 9 resp. 10 ist über eine on-line-Verbindung 11 resp. 12 mit einem Clearingrechner 16 verbunden. Der Clearingrechner 16 ist ein Computer, der die verschiedenen Guthaben von Kunden und Betreibern verwaltet. Für jeden Kunden, der eine Chipkarte besitzt, ist ein Kundenkonto 13 vorgesehen. Ebenso hat der Betreiber des Kassierautomaten 1 resp. der Inhaber der Betreiberchipkarte 8 ein Betreiberkonto 15. Schliesslich ist noch ein Pool 14 vorgesehen, dessen Bedeutung im folgenden erläutert wird.

Das erste Terminal 9 dient zum Aufladen oder Ausgeben von Kundenchipkarten 7. In herkömmlicher Weise verfügen die Terminals 9, 10 über eine Tastatur 19a, 19b und einen Bildschirm 18a, 18b. Zudem ist ein Chipleser 17a, 17b vorgesehen zum Lesen von Kunden- resp. Betreiberchipkarten 7 resp. 8.

Wenn der Kunde seine Chipkarte aufladen will, dann geht er zu einem Terminal 9, schiebt seine Chipkarte 7 in den Chipleser 17a ein und identifiziert sich über die Tastatur. Dadurch tritt er über die on-line-Verbindung 11 (z. B. eine Telefonleitung) mit dem Prozessor 20 in Verbindung. Wenn die Karte mit einem fest vorgegebenen oder frei wählbaren Betrag geladen wird, dann überträgt der Prozessor 20 den entsprechenden Betrag vom Kundenkonto 13 in den Pool 14. Mit anderen Worten, der Kunde muss den bezogenen Betrag im voraus bezahlen.

Beim Kauf beispielsweise einer Zeitung wird der geschuldete Betrag am Kassierautomaten von der Kundenchipkarte 7 auf die Betreiberchipkarte 8 übertragen. Wenn der Betreiber über den eingenommenen Betrag verfügen können will, dann geht er mit seiner Karte zu einem Terminal 10, schiebt sie dort ein, identifiziert sich und lässt sich den auf der Betreiberchipkarte 8 abgespeicherten Betrag aus dem Pool 14 auf sein Betreiberkonto 15 überweisen. Damit hat sich der Geldkreislauf geschlossen.

Die beiden Terminals 9 und 10 brauchen natürlich nicht physisch getrennte Einheiten zu sein. In der Regel handelt es sich um Multifunktionsterminals, die neben den erwähnten Aufgaben noch weitere erfüllen können. Entsprechend weisen sie neben dem Chipleser 17a, 17b auch einen Bildschirm 18a, 18b und eine Tastatur 19a, 19b auf. Schliesslich können auch mehr oder weniger "intelligente" elektronische Steuermittel vorgesehen sein (in Fig. 2 nicht gezeigt). Die Idee ist die, dass eine Bank oder eine andere Organisation (PTT) den Clearingrechner unterhält, der per Telefon von einer grossen Anzahl Terminals aus angewählt werden kann. Die Terminals sollten natürlich möglichst nahe bei denjenigen sein, die ihre Dienste beanspruchen wollen.

Während im Zusammenhang mit Fig. 1a und 2 der Einfachheit halber stets nur von einem Betreiber die Rede war, so ist es natürlich durchaus denkbar und sogar sinnvoll, verschiedene Betreiberkonten resp. Kassierautomaten mit einem Clearingrechner zu bedienen. Sinngemäss können auch mehrere Pools vorgesehen sein.

Fig. 1b zeigt einen erfindungsgemässen Kassierautomaten 1. Der wesentliche Unterschied zum soeben beschriebenen Automaten gemäss Fig. la besteht darin, dass nur genau ein Chipleser 2 vorgesehen ist, dafür aber ein spezieller Zwischenspeicher 21. Zum Einkassieren wird die Kundenchipkarte 7 in den Chipleser 2 eingeführt und der geschuldete Betrag in den gesicherten Zwischenspeicher 21 übertragen. Auf diese Weise wird eine grosse Zahl von Transaktionen mit verschiedenen Kundenchipkarten 7 durchgeführt. Am Abend beispielsweise führt der Betreiber seine Betreiberchipkarte 8 in den Chipleser 2 ein und überträgt den gesamten wertmässigen Inhalt des Zwischenspeichers auf seine Betreiberchipkarte 8. Die Kontrolle über die Transaktion und die richtige Ansteuerung der übrigen Einheiten übernimmt die Kleingeldtransfersteuerung 6.

Ein wichtiger Aspekt bei der Betreiberchipkarte, insbesondere bei der Variante gemäss Fig. la, besteht darin, dass unterschiedliche Sicherheitsstufen vorgesehen sind. Die Ueberwachung der Sicherheitsstufe übernimmt eine im Chip integrierte Steuereinheit (Prozessor oder Logikschaltung). Sie überwacht die Zugriffserlaubnis auf die Speichereinheit. So erfolgt der Kleingeldtransfer von der Kundenchipkarte auf die Betreiberchipkarte ohne diversifizierten Schlüssel. D. h. alle Transaktionen werden mit dem selben elektronischen Schlüssel (Code) durchgeführt. Auch die verschiedenen Kundenkarten werden in der Regel nicht registriert. Höchstens zum Abwehren unerlaubter Manipulationen an der Betreiberchipkarte oder am Kassierautomaten kann eine bestimmte Transaktion mit einer Identifikationsnummer (z. B. Kundennummer) versehen werden, die auf der Betreiberchipkarte abgespeichert wird. Beim Leeren der Betreiberchipkarte kann dann der Clearingrechner überprüfen, ob es sich um eine tatsächliche oder eine fingierte Uebertragung handelt. Der Betreiberchip ist vorzugsweise mit einem Passwort sicherbar (einfach Steuerlogik) oder hat einen eigenen integrierten Prozessor zur Realisierung unterschiedlicher Sicherheitsstufen.

Der Kundenchip kann aus einer einfachen integrierten Schaltung (z. B. EPROM oder EEPROM), einem mit einer einfachen Logik gegen unzulässigen Zugriff geschützten Halbleiterspeicher oder einem von einem Mikroprozessor überwachten Speicher bestehen. Vorzugsweise ist der Kundenchip möglichst einfach und kostengünstig realisiert. Auch insgesamt sind die Sicherheitsanforderungen an die Kundenchipkarte geringer als die an die Betreiberchipkarte. Letztere arbeitet vorzugsweise auf zwei verschiedenen Sicherheitsstufen. Da die einzelnen Beträge während des Kassierens klein sind, genügt nämlich eine bescheidene Sicherheitskontrolle. Wenn dagegen der Betreiber sich den einkassierten Betrag (der sich beispielsweise auf mehrere tausend Franken belaufen kann) gutschreiben lassen will, dann empfiehlt es sich, eine hohe Sicherheitsstufe zu verwenden.

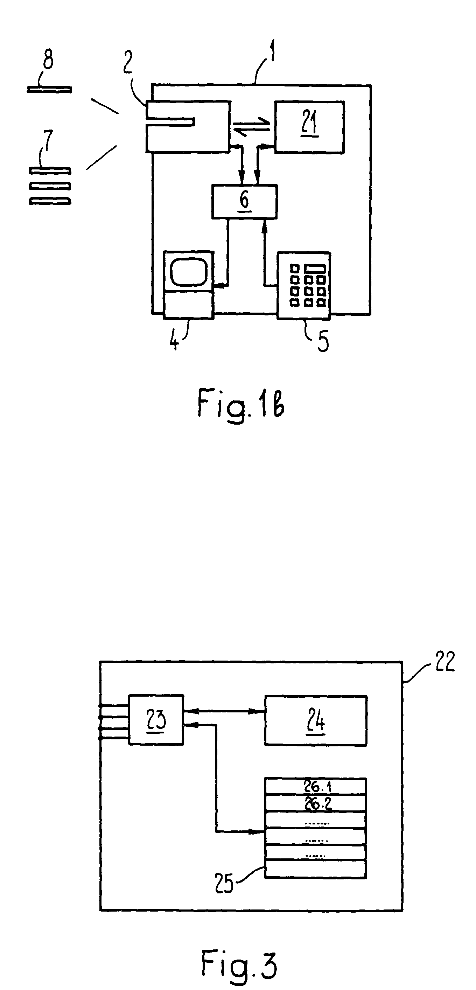

Fig. 3 zeigt das Blockschaltbild eines bevorzugten Kundenchips 22. Er weist eine Steuereinheit 23, eine erste Speichereinheit 24 und eine zweite Speichereinheit 25 auf. Die erste Speichereinheit 24 beinhaltet Daten allgemeiner Art über den Kunden (Identifikationsdaten) und Daten über den gespeicherten Betrag. Der zweite Speicher 25 umfasst eine grosse Zahl von gleichartigen Speicherblöcken 26.1, 26.2 usw.

Ueber geeignet angeordnete Kontakte kann die Steuereinheit 23 mit dem Chipleser (vgl. Fig. 1a, 1b, 2) in Verbindung treten. Je nach dem wie intelligent die Steuereinheit 23 ist, kontrolliert sie entweder nur den Zugriff auf die Speichereinheiten 24, 25, oder führt das im folgenden beschriebene Verfahren zum Registrieren von Geldbeträgen selber durch. Bevor aber zum eigentlichen Verfahren übergegangen wird, soll zunächst noch der Aufbau der Speicherblöcke 26.1, 26.2 usw. beschrieben werden.

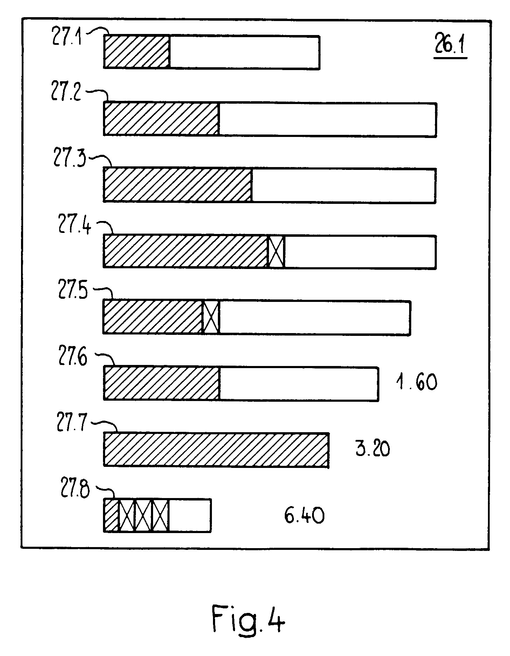

Fig. 4 zeigt den Aufbau eines Speicherblocks im Kundenchip. Jeder Speicherblock 26.1 weist mehrere Speicheruntereinheiten 27.1-27.8 auf. Diese Speicheruntereinheiten 27.1-27.8 sind z. B. EPROM-Speicher, die einmal geschrieben, aber viele Male gelesen werden können. Wenn der Chip neu ist, dann sind beispielsweise alle Speicheruntereinheiten mit Nullen gefüllt. Jede Speicheruntereinheit entspricht einer bestimmten Werteinheit. Die Speicheruntereinheiten 27.1-27.8 des gleichen Speicherblocks 26.1 haben alle unterschiedliche Werteinheiten. So entspricht ein Bit in der Speicheruntereinheit 27.1 beispielsweise einer Werteinheit von 5 Rappen. Ein Bit der nächst höheren Speicheruntereinheit 27.2 entspricht vorzugsweise einer Werteinheit von 10 Rappen (= doppelter Betrag).

Gemäss einer Ausgestaltung der Erfindung sind die Werteinheiten auf eine ganzzahlige Zweierpotenz der kleinsten Werteinheit festgelegt. Im vorliegenden Beispiel bedeutet dies, dass die unterste Speicheruntereinheit 27.8 Werteinheiten vom Betrag Fr. 6.40 beinhaltet. Wenn also beispielsweise der gesamte Speicherplatz eines Speicherblocks 26.1 auf 256 Bit begrenzt ist, dann kann durch das Vorsehen unterschiedlicher Speicheruntereinheiten mit verschiedenen Werteinheiten der maximal abspeicherbare Betrag verhältnismässig gross werden, ohne dass auf die kleinen Einheiten verzichtet werden muss. Anstatt 256 x 5 Rp. = Fr. 12.80, kann bei Aufteilung in acht gleichgrosse Blöcke zu 32 Bit ein Betrag von 32 x (0.05 + 0.1 + 0.2 + 0.4 + 0.8 + 1.6 + 3.2 + 6.4) Fr. = 32 x Fr. 12.70 = Fr. 406.40 abgespeichert werden.

Entsprechend einer bevorzugten Ausführungsform sind zudem die Speicheruntereinheiten 27.1-27.8 unterschiedlich gross. Und zwar ist ihre Grösse an das statistische Kaufverhalten des Kunden angepasst. Wenn alle zu bezahlenden Geldbeträge gleich häufig auftreten, dann ist folgende Aufteilung vorteilhaft:
26 Einheiten zu 0.05 Franken
40 Einheiten zu 0.1 Franken
40 Einheiten zu 0.2 Franken
40 Einheiten zu 0.4 Franken
37 Einheiten zu 0.8 Franken
33 Einheiten zu 1.6 Franken
27 Einheiten zu 3.2 Franken
13 Einheiten zu 6.4 Franken

Durch diese Verteilung ist statistisch gewährleistet, dass alle Speicheruntereinheiten etwa gleich rasch aufgebraucht sind. Dieser Vorteil wird im Zusammenhang mit dem nachfolgend beschriebenen Registrierverfahren besser verständlich.

Es wird angenommen, dass am Kassierautomaten der Betrag von Fr. 1.35 abzubuchen ist. Zum Abbuchen dieses Betrags geht die Steuereinheit wie folgt vor: Als erstes wird die grösste zur Verfügung stehende Einheit gesucht, die kleiner als der Betrag ist. Im vorliegenden Beispiel ist es die Einheit von 0.8 Franken. In dieser Speichereinheit 27.4 werden nun so viele Werteinheiten gelöscht, dass der verbleibende Restbetrag kleiner als die entsprechende Werteinheit ist. Im vorliegenden Beispiel ist es genau eine Einheit.

Mit dem Restbetrag wird nun auf analoge Weise verfahren. D. h. es wird die grösste zur Verfügung stehende Werteinheit bestimmt, die kleiner als der Restbetrag ist. Im vorliegenden Fall ist es die Einheit von 0.4 Franken. Da im Restbetrag von 0.55 Franken die Werteinheit von 0.4 Franken genau einmal Platz hat, wird genau eine Werteinheit zu 0.4 Franken ausgelöscht.

Die Werteinheit, die kleiner als der verbleibende Restbetrag von 0.15 Franken ist, wäre die Werteinheit zu 0.1 Franken. Da diese bereits aufgebraucht ist, wird zur nächst kleineren gegangen (0.05 Franken) und von dieser so viele Einheiten ausgelöscht, wie im Restbetrag Platz haben, d. h. drei Stück. Damit ist der gesamte geschuldete Betrag registriert. Da die kleinste verfügbare Werteinheit vorzugsweise der kleinsten handelsüblichen Münzeinheit einer bestimmten Landeswährung entspricht, kann jeder vernünftige (auch mit Bargeld bezahlbare) Betrag auf diese Weise vollständig registriert werden. Voraussetzung ist allerdings, dass genügend Werteinheiten insgesamt zur Verfügung stehen.

Wenn die kleinste Werteinheit aufgebraucht ist, der Geldbetrag aber noch nicht vollständig abgebucht ist, dann wird zum nächsten Speicherblock 26.2 (Fig. 3) gegangen, dessen Struktur identisch ist zu der in Fig. 4 gezeigten. Es leuchtet ein, dass durch das beschriebene Verfahren nicht alle Speicheruntereinheiten gleich schnell aufgebraucht sind. Um aber nicht eine grosse Zahl von beinahe leeren Speicherblöcken lesen zu müssen während der Transaktion, werden diejenigen Speicherblöcke als leer gekennzeichnet, deren kleinste Werteinheit vollständig aufgebraucht ist. Die leeren Speicherblöcke können beispielsweise in der Speichereinheit 24 identifiziert werden.

Aufgrund der verbraucherangepassten Verteilung/Länge der Speicheruntereinheiten ist statistisch gesehen der gesamte Speicherblock leer, wenn die kleinste Werteinheit aufgebraucht ist. Im Mittel bleiben in einem als leer gekennzeichneten Block somit nur ganz wenige nicht gelöschte Werteinheiten ungenutzt zurück. Eine weitere Verbesserung bei der Speicherplatznutzung ergibt sich dann, wenn die Speicheruntereinheiten eine variable, beim Aufladen änderbare Länge haben. Durch eine z. B. vom Terminal 9 (Fig. 2) ausgeführte Auswertung der als leer gekennzeichneten Speicherblöcke kann die Aufteilung in Speicheruntereinheiten so vorgenommen werden, dass in Zukunft auch bei individuell spezifischen Zahlungsverhalten den Speicher optimal gleichmässig genutzt wird. Kauft beispielsweise ein Kunde immer nur eine Zeitung zu Fr. 1.35 (vgl. Beispiel zu Fig. 4), dann braucht er von den Werteinheiten 1.60, 3.20 und 6.40 in der Regel keine. Beim kundenspezifischen Aufladen und Einteilen würden die entsprechenden Speicheruntereinheiten sehr klein gewählt werden. Es könnte z. B. ein Minimum von je zwei Werteinheiten vorgesehen sein (für alle Fälle).

Wenn es darum geht, die Chipkarte am Terminal 9 (Fig. 2) aufzuladen, dann wird in der Speichereinheit 24 ein Wert abgespeichert, der sich aus dem Restbetrag vor dem Aufladen, dem in den teilweisen angebrauchten Speichereinheiten entwerteten Betrag sowie dem vom Kunden neu einbezahlten Betrag als Summe ergibt. Vorzugsweise ist die Speichereinheit 24 so geschützt, dass ihr Inhalt nur vom Terminal 9 geändert werden kann.

Das beschriebene Registrierverfahren kann von der Kleingeldtransfersteuerung 6 des Kassierautomaten 1 oder von einer auf dem Kundenchip integrierten, intelligenten Steuereinheit durchgeführt werden. Beide Varianten liegen im Rahmen der Erfindung.

Zusammenfassend kann festgestellt werden, dass mit der Erfindung ein Kassierautomat sowie eine Anlage zum Durchführen des Kleingeldverkehrs geschaffen worden ist, die eine beträchtliche Vereinfachung sowohl auf Kundenseite als auch auf Betreiberseite mit sich bringen.

## Patentansprüche

1. Kassierautomat mit einem Chipleser (2) für den bidirektionalen Datenaustausch zwischen einem tragbaren Chip von der Art einer Chipkarte (7) und dem Kassierautomaten (1) und einer Kleingeldtransfersteuerung (6) zum Einkassieren von elektronischem Kleingeld von einem mit dem Chipleser (2) in Verbindung stehenden Kundenchip, wobei das einkassierte elektronische Kleingeld auf einen tragbaren Betreiberchip von der Art einer Chipkarte (8) übertragen wird, dadurch gekennzeichnet, dass genau ein Chipleser (2) vorgesehen ist und dass die Kleingeldtransfersteuerung (6) so ausgebildet ist, dass jeder elektronische Kleingeldtransfer mit jedem Kundenchip (7) in einem Zwischenspeicher (21) des Kassierautomaten (1) registriert wird und dass der Inhalt des Zwischenspeichers (21) über denselben Chipleser (2) später auf den Betreiberchip (8) entleert wird.

2. Betreiberchip für den Kassierautomaten nach Anspruch 1, mit mindestens einer Speichereinheit und einer Steuereinheit, dadurch gekennzeichnet, dass die Steuereinheit so ausgebildet ist, dass einerseits ein Aufladen der mindestens einen Speichereinheit beim elektronischen Kleingeldtransfer vom Zwischenspeicher (21) zum Betreiberchip (8) ohne Ueberprüfung der Berechtigung des Betreibers, dass andererseits aber das Entleeren dieser Speichereinheit an einem Terminal (10) eines Clearingrechners (16) nur bei erfolgreichem Berechtigungsnachweis des Betreibers durchgeführt werden kann.

3. Anlage für den elektronischen Kleingeldverkehr mit mindestens einem Kassierautomaten nach Anspruch 1, mindestens einem Kundenchip (7), mindestens einem Betreiberchip (8) insbesondere nach Anspruch 2 für den Kassierautomaten (1) und mit einem Clearingrechner (16) mit mindestens einem ersten on-line-Terminal (9) zum Ausgeben von Kundenchips (7) oder Aufladen der Kundenchips (7) und mindestens einem zweiten on-line- Terminal (10) zum Entleeren des mindestens einen Betreiberchips (8).

4. Anlage nach Anspruch 3, dadurch gekennzeichnet, dass der Kundenchip eine Speichereinheit (25) aufweist, wobei die Speichereinheit (25) mehrere Speicheruntereinheiten (27.1-27.8) aufweist, jede Speicheruntereinheit (27.1-27.8) Geldwerte in der Form einer für sie spezifischen Werteinheit registriert und wobei die Speicheruntereinheiten (27.1-27.8) verschieden gross sind, wobei die relative Grösse auf das Zahlungsverhalten des Kunden abgestimmt ist.

5. Anlage nach Anspruch 4, dadurch gekennzeichnet, dass beim Kundenchip (7) der Betrag der kleinsten Werteinheit einer kleinsten handelsüblichen Münzeinheit einer bestimmten Landeswährung entspricht, und dass die spezifischen Werteinheiten der anderen Speicheruntereinheiten (27.2-27.8) einer ganzzahligen Zweierpotenz der kleinsten Werteinheit entsprechen.

6. Anlage nach einem der Ansprüche 3 bis 5, dadurch gekennzeichnet, dass die Kleingeldtransfersteuerung (6) des Kassierautomaten (1) oder eine Steuereinheit (23) des Kundenchips (7) so ausgebildet ist, dass zum Abbuchen eines bestimmten Geldwerts in der Speichereinheit (25) des Kundenchips beginnend bei der grössten noch verfügbaren Werteinheit, die nicht grösser als der bestimmte Geldwert ist,
a) so viele Werteinheiten ausgelöscht werden, dass ein verbleibender Restbetrag kleiner als die Werteinheit ist oder die Werteinheit aufgebraucht ist,
b) falls der Restbetrag > 0 ist, dann bei der nächst kleineren noch verfügbaren Werteinheit, die nicht grösser als der im vorhergehenden Schritt verbliebene Restbetrag ist, analog zu Schritt a) ausgelöscht wird, wobei dieser Schritt wiederholt wird, bis der gesamte Geldwert registriert ist.

7. Anlage nach Anspruch 6, dadurch gekennzeichnet, dass zum Aufladen des Kundenchips (7) eine Steuerung (23) vorgesehen ist, die so ausgebildet ist, dass zum Aufladen eines bestimmten Geldbetrags in einer weiteren Speichereinheit (24) des Kundenchips ein Wert abgespeichert wird, der der Summe aus einem vor dem Aufladen vorhandenen Restbetrag, dem bestimmten Geldbetrag und dem Gesamtwert der insgesamt in den teilweise entwerteten Speicheruntereinheiten der ersten Speichereinheit (25) bereits registrierten Betrags entspricht.

8. Anlage nach Anspruch 7, dadurch gekennzeichnet, dass der Kundenchip mehrere gleiche Speicherblöcke (26.1, 26.2 usw.) mit Speicheruntereinheiten (27.1-27.8) aufweist und dass die Steuereinheit (23) so ausgebildet ist, dass die Speicherblöcke, deren Speicheruntereinheiten (27.1) mit kleinsten Werteinheiten alle aufgebraucht sind, beim Aufladen als entwertet markiert werden.

## Claims

1. Automatic dispenser with a chip reader (2) for the bidirectional exchange of data between a portable chip of the chip card (7) type and the automatic dispenser (1) and a cash transfer controller (6) for collecting electronic cash from a customer chip connected to the chip reader (2), wherein the collected electronic cash is transferred to a portable user chip of the chip card (8) type, characterized in that exactly one chip reader (2) is provided and in that the cash transfer controller (6) is designed in such a way that each electronic cash transfer with each customer chip (7) is recorded in an intermediate memory (21) of the automatic dispenser (1) and in that the content of the intermediate memory (21) is subsequently discharged onto the user chip (8) via the same chip reader (2).

2. User chip for the automatic dispenser according to Claim 1 with at least one memory unit and one control unit, characterized in that the control unit is designed in such a way that, on the one hand, loading of the memory unit, of which there is at least one, during the electronic transfer of cash from the intermediate memory (21) to the user chip (8) can be carried out without checking the user's authorization but, on the other hand, the discharge of this memory unit to a terminal (10) of a clearing computer (16) can only be carried out after successful demonstration of authorization by the user.

3. Installation for electronic cash traffic with at least one automatic dispenser according to Claim 1, at least one customer chip (7), at least one user chip (8), in particular according to Claim 2, for the automatic dispenser (1) and with a clearing computer (16) with at least one first on-line terminal (9) for issuing customer chips (7) or loading customer chips (7) and at least one second on-line terminal (10) for discharging the user chip (8) of which there is at least one.

4. Installation according to Claim 3, characterized in that the customer chip has a memory unit (25), the memory unit (25) having several memory sub-units (27.1-27.8), each memory sub-unit (27.1-27.8) recording money values in the form of a value unit specific to them and the memory sub-units (27.1-27.8) being of different sizes, the relative size being adapted to the customer's payment behaviour.

5. Installation according to Claim 4, characterized in that, with the customer chip (7), the amount of the smallest value unit corresponds to the smallest commercial coin unit of a specific national currency and in that the specific value units of the other memory sub-units (27.2-27.8) correspond to an integral power of two of the smallest value unit.

6. Installation according to one of Claims 3 to 5, characterized in that the cash transfer controller (6) of the automatic dispenser (1) or a control unit (23) of the customer chip (7) is designed in such a way that, in order to withdraw a specific money value in the memory unit (25) of the customer chip beginning with the greatest value unit which is still available and is not greater than the specific money value
a) sufficient value units have to be cancelled for a remaining residual amount to be smaller than the value unit or the value unit to be used up,
b) if the residual amount > 0, cancellation similar to step a) is carried out with the next smaller value unit which is still available and is not greater than the residual amount remaining in the preceding step, this step being repeated until the entire money value is recorded.

7. Installation according to Claim 6, characterized in that a controller (23) is provided for loading the customer chip (7), the controller (23) being designed in such a way that a value is stored in a further memory unit (24) of the customer chip for loading a specific money amount, this value corresponding to the sum of a residual amount present before loading, the specific money amount and the total value of the amount already recorded in the partially invalidated memory sub-units of the first memory unit (25).

8. Installation according to Claim 7, characterized in that the customer chip has several identical memory blocks (26.1, 26.2 etc.) with memory sub-units (27.1-27.8) and in that the control unit (23) is designed in such a way that the memory blocks whose memory sub-units (27.1) are all used up with minimum value units are marked as invalidated during loading.

## Revendications

1. Caisse automatique dotée d'un lecteur de puce (2) pour l'échange bidirectionnel de données entre une puce portable de type carte à puce (7) et la caisse automatique (1) ainsi qu'une commande de transport de monnaie (6) destinée à encaisser de la monnaie électronique à partir d'une puce client reliée à un lecteur de puce (2), la monnaie électronique encaissée étant transférée sur une puce exploitant de type carte à puce, caractérisée en ce qu'il est prévu un lecteur de puce (2) et en ce que la commande de transfert de monnaie est conçue de manière à ce que chaque transfert de monnaie électronique avec chaque puce client est enregistrée dans une mémoire intermédiaire (21) de la caisse automatique (1), et en ce que le contenu de la mémoire intermédiaire (21) est vidé ensuite par le même lecteur de puce (2) sur la puce exploitant (8).

2. Puce exploitant destinée à la caisse automatique selon la revendication 1 dotée d'au moins une unité de mémoire et d'une unité de commande, caractérisée en ce que l'unité de commande est conçue de manière à ce que, d'une part le chargement d'au moins une unité de mémoire au cours du transfert électronique de monnaie soit possible à partir de la mémoire intermédiaire (21) vers la puce exploitant (8) sans s'assurer que l'exploitant est autorisé à le faire, et de manière à ce que d'autre part, il soit possible de vider cette unité de mémoire sur un terminal (10) d'un calculateur de gestion des comptes clients et exploitants (16) uniquement si l'exploitant est en mesure de justifier qu'il est autorisé à effectuer cette opération.

3. Installation destinée à la circulation électronique de monnaie dotée d'au moins une caisse automatique selon la revendication 1, d'au moins une puce (7) client, d'au moins une puce exploitant (8), notamment selon la revendication 2 pour la caisse automatique (1), laquelle installation étant dotée d'un calculateur de gestion des comptes clients et exploitants (16) avec au moins un premier terminal (9) on-line destiné à délivrer des puces client (7) ou à charger des puces clients (7) et d'au moins un second terminal (10) on-line destiné à vider au moins une puce exploitant.

4. Installation selon la revendication 3, caractérisée en ce que la puce client comporte une unité de mémoire (25), l'unité de mémoire (25) comportant plusieurs sous-unités de mémoire (27.1-27.8), chaque sous-unité de mémoire (27.1-27.8) enregistrant des valeurs monétaires sous la forme d'une unité de valeur qui lui est spécifique et les sous-unités de mémoire (27.1-27.8) ayant des tailles différentes ; les tailles relatives étant adaptées au comportement de paiement du client.

5. Installation selon la revendication 4, caractérisée en ce que sur la puce client, le montant de la plus petite unité de valeur correspond à la plus petite unité monétaire courante dans un pays, et en ce que les unités de valeurs spécifiques des autres sous-unités de mémoire (27.2-27.8) correspondent à une deuxième puissance à nombre entier de l'unité de valeur la plus petite.

6. Installation selon l'une quelconque des revendications 3 à 5, caractérisée en ce que la commande de transfert de monnaie (6) de la caisse automatique (1) ou une unité de commande (23) de la puce (7) client est conçue de manière à ce que, pour débiter une valeur monétaire donnée dans l'unité de mémoire (25) de la puce client en commençant par l'unité de valeur la plus élevée encore disponible qui n'est pas supérieure à la valeur monétaire donnée :
a) autant d'unités de valeur soient effacées de manière à ce qu'un montant restant soit inférieur à l'unité monétaire ou que l'unité monétaire soit utilisée,
b) si le montant restant est supérieur à 0, des unités de valeurs sont effacées de la même façon que dans l'étape a) en ce qui concerne la plus petite unité de valeur encore disponible se trouvant à la suite, laquelle valeur n'est pas supérieure au montant restant dans l'étape citée plus haut ; cette étape se renouvelant jusqu'à ce que la valeur monétaire totale soit enregistrée.

7. Installation selon la revendication 6, caractérisée en ce qu'il est prévu une commande (23) pour charger la puce (7) client , laquelle commande est conçue de manière à ce qu'une valeur soit enregistrée pour charger une somme d'argent donnée dans une unité de mémoire complémentaire (24) de la puce client, ladite valeur correspondant à la somme provenant d'un montant existant avant le chargement, à la somme d'argent donnée, et à la valeur totale du montant déjà enregistré en totalité dans les sous-unités de mémoire en partie dévalorisées de la première unité de mémoire (25).

8. Installation selon la revendication 7, caractérisée en ce que la puce client comporte plusieurs blocs de mémoire (26.1-26.2 etc....) identiques dotés de sous-unités de mémoire (27.1-27.8) et en ce que l'unité de commande (23) est conçue de manière à ce que les blocs de commande portent lors du chargement la mention dévalorisé ; blocs de commande dont les sous-unités de mémoire (27.1) comportant les unités de valeur les plus petites sont toutes utilisées.
